# EUROPEAN PATENT APPLICATION

(11) **EP 2 827 598 A1**
(43) Date of publication of application: **21.01.2015**
(21) Application number: 13176974.7
(22) Date of filing: 18.07.2013
(51) Int. Cl.: H04N 21/418, H04N 21/4367, H04N 21/2347

(54) **A system for receiving and decrypting streaming content**

(71) Applicant: OpenTV, Inc., San Francisco, CA 94111 (US)
(72) Inventor: Staunton-Lambert, Kevin, Sydney, NSW 2009 (AU)
(74) Representative: Leman Consulting S.A.

(57) **Abstract**

The present invention relates to a system and a device for adding security features associated with a hardware-based root of trust to a system for playing encrypted streaming media content. The system allows for traceability of at least one decrypting element within the system should its decryption capabilities be shared with a third party without authorisation, thereby allowing for at least the decryption element to be revoked.

## Description

### TECHNICAL DOMAIN

The present disclosure generally relates to the domain of computing systems for secure processing of digital media content. More particularly, according to aspects of the invention presently disclosed herein, provision is made for a hardware root of trust for secure local distribution of protected digital media content.

### STATE OF THE ART

In order to guarantee a financial return on their investments, providers of digital media content generally require that rights to consume their assets be properly controlled and managed. In order to satisfy this requirement, particularly when such assets are delivered via publicly accessible means such as the Internet, a significant amount of cooperation is required between the provider of the content and the hardware and software used at the consumer's end for rendering the content. A certain degree of control can be obtained using only software, which typically embeds one or more digital licenses. The digital licenses may be in the form of AES keys added as part of the asset itself or into a so-called license wallet held within the software client or in the cloud.

If adequate protection of the digital rights is to be provided, then each asset to be protected must then be unique at the time of its broadcast/delivery. However, this may present problems of delivery bandwidth when secure multicasting is to be performed or it may prevent legitimate sharing of assets at the receiver end when the consumer has a number of different rendering devices. When a license wallet is held in the cloud, in order for the license to be checked, the quality of service needs to be guaranteed, which is not always the case. Such checks may also prove costly to the end user in the case where mobile connectivity is not free. When a license is held in software or in a non-volatile memory there is always a significant risk of the security being compromised due to hacking.

Consumers of digital media content expect to be able to access content seamlessly across different devices, without being limited by digital rights management (DRM) issues. Once a consumer has paid for content, he wants to be able to view it at any time, from anywhere and on any device whether it be a TV, a PC or a mobile communications device. Mobile communications devices, such as tablet computers and mobile telephones for example, present a particularly challenging environment from the point of view of secure operating systems. Nonetheless, users are demanding more and more flexibility in accessing conditional access (or otherwise protected) content, thereby requiring that these particular challenges be properly addressed. A hardware root of trust may provide a greater level of assurance that security tasks such as user authentication, network access, software verification, application/data isolation and data protection are properly carried out.

A root of trust can be a hardware or software component which is secure by design and which can be trusted to perform one or more security-critical functions such as verification, authentication or protection of cryptographic keys for example. Preferably a root of trust should be a hardware component. Hardware components are generally considered to be more secure than software components since software is known to be vulnerable to the same attacks from the malware that it attempts to thwart.

International Patent Application Publication number 2012/094196 describes a hardware-based root of trust solution for supporting distribution and playback of digital content assets, the solution including an entire media processing pipeline that is protected for content authorisation and playback. The solution allows for the security of a client computing system for content processing to be independent from the operating system, the basic I/O system, the media player application or the host software. However, the solution requires that the client system (for content playback) have its internal hardware (e.g. CPU, graphics engine etc) be specially adapted to perform the secure functions described therein.

*Nagra MediaAccess Persistent Rights Management (PRM)* is another technology known in the state of the art for providing a method for adding a hardware based root of trust in a system, using the so-called *Nagra On-Chip Security (NOCS).* With this technology each client is provided with a unique secret and secure logic to support the software wallet model within close proximity of an integrated circuit configured to provide the *NOCS* features. These features and others are disclosed in European Patent Application Publication number 2,393,031A1, which describes a chipset for allowing access to conditional access data especially where the security of the chipset is an important feature.

*Nagra MediaAccess PRM*/*NOCS* and other such techniques available in the state of the art however, have some obvious drawbacks in that they require all participating rendering devices such as televisions and mobile devices to physically include the necessary hardware, whereas in reality this is most certainly not a given. For example, in order to perform *Nagra MediaAccess PRM* techniques, the manufacturers of the rendering devices must abide by certain *Nagra Advanced Security Certification (NASC)* rules, which is a non-trivial process requiring commercial negotiation.

Problems due to both lack of reliable availability of adequate streaming bandwidth and unauthorised content extrusion within a mobile carrier network are addressed in International Patent Application Publication 2011/068784. In this publication a solution to the first problem is disclosed, whereby a method of adaptive streaming is used in order to adapt the quality of the content to be transmitted at a given time depending on the available transmission bandwidth. The second problem is addressed by having a client-side proxy to decode and parse segments of the received encrypted content file to generate native stream data in the format required for whichever client in the carrier network is to render the content.

### BRIEF SUMMARY OF THE INVENTION

Aspects of the invention described hereafter provide a method for building a hardware-based root of trust for television and local companion devices which do not already include the necessary hardware to be able to do so. According to another aspect of the present invention, provision is made for remotely tracing packets of content and for revoking a device which has been traced as having distributed such content without authorisation. According to still another aspect of the invention, provision is made for tracing a device which has been used to share control words without authorisation.

Embodiments of the present invention provide for a system for receiving and decrypting streaming content, the streaming content being encrypted according to a particular encryption scheme, said decryption yielding at least one decrypted value which is based on at least one traceable hardware-based key embedded within the system, the system comprising:
a media server device for receiving the encrypted streaming content, the media server device being configured to process the decrypted content; and
a first media display device for displaying the processed decrypted content;
   **characterised in that** the system further comprises a detachable security device for:
receiving at least part of the encrypted streaming content (SCT) from the media server device (MS); and
decrypting at least part of the encrypted streaming content from the media server device using the traceable hardware-based key, said traceable hardware-based key being embedded within the security device;
   the security device being further configured to return the decrypted at least part of the encrypted streaming content to the media server device.

According to another aspect of the present invention, there is provided a mobile telephone comprising an NFC wireless RF interface, the mobile telephone **characterised in that** it further comprises a security device (ENOCS), the security device (ENOCS) configured to:
receive, via the NFC wireless RF interface, at least part of an encrypted streaming content (SCT) from a media server device (MS); and
decrypt at least part of the encrypted streaming content (SCT) from the media server device (MS) using a traceable hardware-based key embedded within the security device (ENOCS);
   the security device (ENOCS) being further configured to return the decrypted at least part of the encrypted streaming content (SCT) to the media server device (MS) via the NFC wireless RF interface.

Thanks to embodiments of the present invention, a hardware-based root of trust may be added to an existing system for receiving and playing streaming content, thereby allowing to benefit from the advantages of being able to recover a return on investment of valuable media assets and tracing culprits who attempt to share such assets without authorisation, where the existing system has no built in means for achieving such security.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1, showing a system in which an embodiment of the present invention may be deployed;
Fig. 2, showing a system in which another embodiment of the present invention may be deployed;
Fig. 3, showing a system in which yet another embodiment of the present invention may be deployed.

### DETAILED DESCRIPTION

Embodiments of the present invention may be used to allow content providers of valuable digital assets to have control over content consumption and distribution though a solution which can be configured for multiple devices, thereby providing dynamic, multi-device content protection for a variety of services including Over-the-Top (OTT), on-demand, storage/playback on a Digital Video Recorder (DVR), and secure content propagation within a managed home domain.

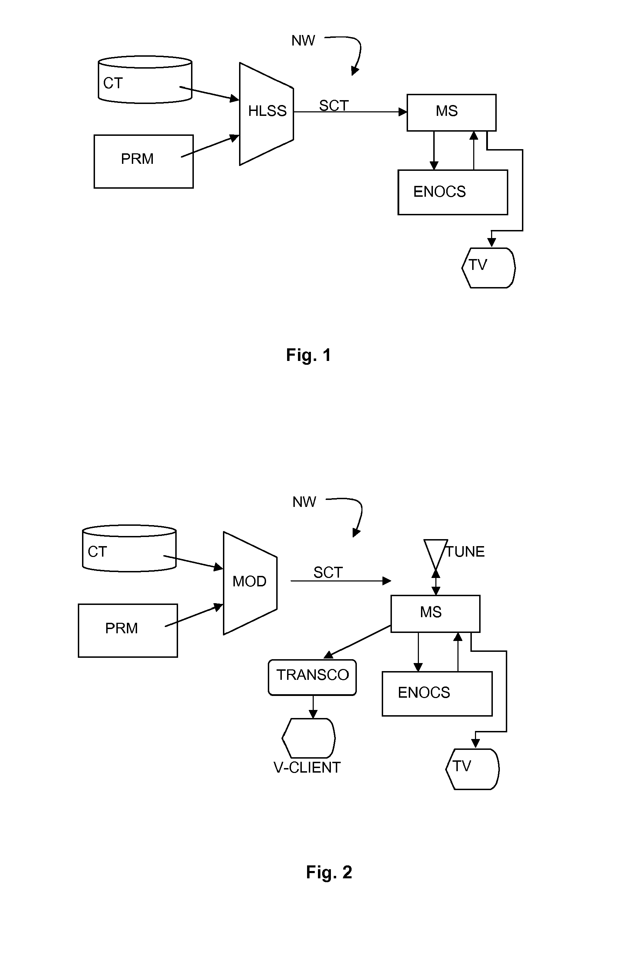

Fig. 1 shows a system in which an embodiment of the present invention may be deployed. The drawing shows a HTTP Live Streaming Server (HLSS) at a first end of a distribution network (NW). The distribution network (NW) may be the Internet for example or any other network which allows for targeted delivery of content to a particular user. The server (HLSS) has access at least to the content (CT) that is to be delivered to the user. The content (CT) is generally available in packets, as known in the state of the art, and a number of packets may form a segment of content. In other words, the content may generally be organised as an MPEG2 programme stream (MPG-PS). In the case where content delivery is to be done using adapted streaming techniques, the same content may exist in a number of different segments, each segment being of a different quality such that the most appropriate quality of segment is chosen, dependent on available bandwidth. The server (HLSS) further has access to hardware and software configured to perform a particular type of encryption (PRM) on the content before streaming (SCT) it towards the particular user. An example of the particular type of encryption is *Nagra MediaAccess PRM.* Any encryption can be used as the particular type of encryption as long as it is compatible with a system providing a hardware-based root of trust.

A small computer or processor (RPI) is connected to a second end of the distribution network i.e. the particular user's end. The small computer (RPI) is configured to receive the streaming content (SCT) via the distribution network (NW). The small computer comprises a media player application, configured to process received media content in order for the small computer to pass the processed content to a display device (or rendering device) (TV) for rendering of the content. However, the small computer may not have the necessary capabilities for decrypting the streaming content (SCT) as encrypted by the particular king of encryption (PRM). Even if it were able to decrypt the streaming content, it would not be able to do so in a trusted manner.

Small computers for the purpose required in the present invention exist in the state of the art. By small it is meant for example a credit card sized computer. The *Raspberry* Pi computer, for example, is suitable for the system mentioned above. Any type of media player application may be used in the small computer (RPI): examples of such applications are *VLC* or *XBMC.* The small computer and the media player application form what may be referred to as a media server device, the media server device (MS) in this case usually being dedicated to, or at least optimised for, the purpose of receiving and processing streamed digital media content.

According to systems already existing in the state of the art, the media server device (MS) would then transfer the processed streaming content to a rendering device such as a TV or a PC or a mobile communications device such as a PC or a tablet computer for example. Such transfer may be by a known standard such as HDMI or USB for example. In the case where copyright protection is required during this transfer any of the known standard interfaces which are configured to achieve this could be used, for example using the *HDCP* standard. *HDCP* was developed by *Intel Corporation* as a High-Bandwidth Digital Content Protection and is generally accepted as an industry standard for preventing copying of digital audio content as it travels across connections. For such protection to work, HDCP must be built into both devices participating in a communication e.g. a HD cable set-top box and a TV. When such a connection is a High-Definition Multimedia Interface (HDMI), a TV using the HDCP standard may be referred to as a HDMI/HDCP TV. The rendering device, or media display device, (TV) of Fig. 1 may therefore be a HDMI/HDCP TV.

HDCP works by encrypting a digital signal with a key that requires authentication from the transmitting and receiving device. If authentication fails then the signal fails, which means no picture on the TV screen.

According to the embodiment of the invention illustrated in Fig. 1, instead of the media server device (MS) being connected to the rendering device (TV), a dongle (ENOCS) is inserted between the media server device (MS) and the rendering device (TV). The dongle (or adaptor) is configured to receive the streaming content (SCT), encrypted according to the particular type of encryption (PRM), decrypt the encrypted streaming content and send the decrypted streaming content back to the media server device (MS). For this purpose there is a bidirectional interface between the dongle (ENOCS) and the media server device (MS). The media server device (MS) can therefore use the existing connection to the rendering device (TV) to send the decrypted streaming content for display. According to one embodiment, the bidirectional interface is a HDMI interface. According to another embodiment, the bidirectional interface is of a Consumer Electronic Control over HDMI type (HDMI-CEC).

The Consumer Electronic Control standard (CEC) allows control of the device on which the media player application runs (e.g. the XBMC on the media server device (MS)) over the standard TV remote that comes with a standard TV set. As buttons are pressed the remote command is sent via the HDMI cable to the XBMC on the media server device (MS). CEC allows for control of devices over the HDMI port, which allows for things like controlling XBMC from the remote control, automatically switching to the correct TV input device and so on.

The particular type of encryption used (as described above) dictates that a device used to decrypt the content will be traceable. Therefore the decrypted content which is sent back to the media server device (MS) is traceable back to the dongle (ENOCS). The dongle (ENOCS) therefore provides a hardware based root of trust for the system, thereby providing secure logic and a unique secret to support a software wallet module within close proximity to the media server device (MS). The particular type of encryption used may be *Nagra MediaAccess PRM* for example. The dongle (ENOCS) takes encrypted packets e.g. AES keys or control words from the upstream server and provides back decrypted packets (but still an AES key or CSA key for example) which remain uniquely identifiable to that particular dongle (ENOCS).

Any of the known techniques may be used to impart the mentioned traceability to the decrypted content. According to a particular embodiment however, it is the techniques used in the *Nagra On-Chip Security* (*NOCS*) system which are used. The decrypted content, or at least one segment therefrom, can be traced back to a hardware-configured key within the dongle (ENOCS). By hardware-configured key it means a value which is hardwired in an unalterable fashion into a piece of hardware in the system: for example into a security module. A value burned into a read-only memory could be a hardware-configured key. Likewise a value represented by the states of a series of switches could be a hardware-configured key, especially if the states of the switches cannot be altered after they have been set. The hardware-configured key is therefore otherwise described herein as being a traceable hardware key and any key which is derived from this key is referred to as a traceable hardware-based key. By traceable it means that the value of the key can be used to identify the hardware within which it has been defined. A common way of arranging for this is to have a unique value for each key in order that the values can be used to uniquely identify or "trace" the hardware from which it came.

Mobile High-Definition Links (MHL) is an industry standard for a mobile audio/video interface that allows consumers to connect mobile phones, tablets and other portable consumer electronics (CE) devices to high-definition televisions (HDTVs) and audio receivers. According to other embodiments of the present invention, the bidirectional interface may be HDMI 1.4 Ethernet, any of the known wireless connections, such as Bluetooth or NFC, or any of the known MHL channels.

Optionally the dongle (ENOCS) could include wireless technology such as Bluetooth to support close proximity devices. The dongle (ENOCS) then gives the system an on-the-fly decryption capability with all the advantages of having a hardware-based root of trust within the system.

Alternatively, instead of using Bluetooth as a proximity wireless radio frequency (RF) technology, any of the other known proximity wireless RF technologies may be used. For example, according to an embodiment, a Near-Field Communication (NFC) scheme could be used for the communication between the dongle (ENOCS) and the media server device. NFC technology is useful for portable communication devices, especially when such devices are small, such as a mobile phone. According to a particular embodiment of the invention, the media server device could be in the home, receiving encrypted streaming content from the Internet for example, and the security device (i.e. the dongle) could be inside, or otherwise attached to, a user's mobile phone, the security device being configured to communicate with the media server via NFC. In this case, whenever the user is close enough to the media server, the hardware-based root of trust is established and decrypted content can be extracted from the received streaming content.

Fig. 2 shows another system in which an embodiment of the present invention may be deployed. This system is typically used to add PayTV services to an existing terrestrial digital video broadcasting (DVB terrestrial) network and may use a transcoder (TRANSCO) to perform an appropriate transcode for various companion devices (V-CLIENT).

In this system, the terrestrial network operator adds services to a content (CT) using specially encrypted control words, for example, using *Nagra* encrypted DVB-CSA control words (PRM) (according to the *Nagra MediaAccess PRM),* then modulates (MOD) and transmits the encrypted content to the user. The modulation could be a DVB terrestrial PSK/QAM COFDM modulating scheme as is known in the state of the art. Alternatively, any of the known RF modulating schemes may be used.

The user has a media server device (MS) such as a Raspberry Pi (RPI) running a media player application (XBMC) for example, with a terrestrial DVB tuner attached (TUNE). The user thereby receives the encrypted content programme stream (SCT). An adaptor or dongle (ENOCS) is attached to the media server device (MS) as described above.

According to one embodiment, the media server device (MS) makes multiple requests, via the HDMI-CEC interface, to the dongle (ENOCS), thereby passing the *Nagra* encrypted control words and the encrypted content to the dongle. The dongle (ENOCS) decrypts the control words, decrypts the content using the decrypted control words and passes the decrypted content back to the media server device (MS). Thanks to the particular encryption scheme (PRM) at least one of the segments of the decrypted content will be traceable back to at least one hardware-based key within the dongle (ENOCS), the hardware-based key being derived from a traceable hardware key uniquely identifying the dongle. Therefore, if such a segment is shared, then the identity of the dongle (ENOCS) from whence it came will be revealed. That particular dongle (ENOCS) can then be revoked. The media server device (MS) processes the decoded content using the media playing application (XBMC) and passes the processed content to the rendering device (TV) (for example a HDTV) either in-the-clear or though HDCP (DTCP) as required by system choice.

According to another embodiment, the media server device (MS) makes multiple requests, via the HDMI-CEC interface, to the dongle (ENOCS), thereby passing the *Nagra* encrypted control words to the dongle. The dongle (ENOCS) decrypts the control words and passes the decrypted control words back to the media server device (MS). Since these control words are traceable, if they are shared then they will reveal the identity of the dongle (ENOCS) from whence they came. That particular dongle (ENOCS) can then be revoked. The media server device (MS) decodes the content and passes the decoded content through to the rendering device (TV) (for example a HDTV) either in-the-clear or though HDCP (DTCP) as required by system choice.

According to a variation of this embodiment, the media server device (MS) may have transcoding ability (e.g. this would be the case in a SoC BCM7425/STiH415) to allow the decoded content to be appropriately transcoded for any from a number of different companion devices i.e. other video clients (V-CLIENT). According to another variation the system further comprises, on the receiver side, dedicated transcoder hardware or software (TRANSCO) (such as SoC *ViXS,* known in the state of the art) to receive the decrypted content from the media server device (MS) and to send a transcoded version of the decrypted content to at least one video client (V-CLIENT) or companion device, the transcoding being done according to the requirements of the particular video client (V-CLIENT). In this way, the system could operate as a NOCS secured micro gateway to transcode HLS to companion HTML5 devices (V-CLIENT) connected to the home network, the decoded content coming from the media server device (MS) thanks to the clear control words supplied by the dongle (ENOCS). In this manner, the dongle (ENOCS) which allows for a content to be decrypted, is traceable.

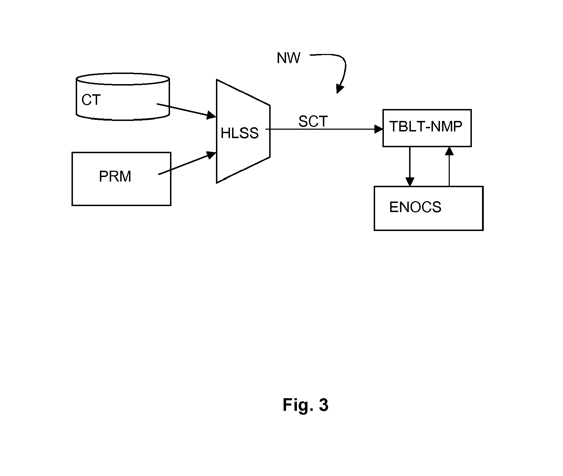

According to yet another embodiment, depicted in Fig. 3, a system using the adaptor (ENOCS) can be used to decode, for example, *Nagra* encrypted HTML5 video with hardware-based root of trust within a companion device. In this system, the HTTP live streamer server (HLSS) segments the Nagra encrypted (PRM) MPEG program stream (CT) to give (encrypted) streaming content (SCT).

In this example, an Android tablet computer (TBLT-NMP) (or an *iPad*) running a network media player application receives encrypted packets directly via HTTP. Any of the known network media player applications (NMP) can be used. The tablet computer (TBLT-NMP) therefore functions as the previously mentioned media server device (MS) (including the small computer (RPI) and the media playing application XBMC) combined with the rendering device (TV).

The network media player application (NMP) then uses the dongle (ENOCS), which is either physically connected to the tablet computer (TBLT-NMP) or wirelessly connected to the tablet computer (TBLT-NMP) via Bluetooth or NFC for example. Thus, the system may now have a NOCS hardware-based root of trust through the dongle (ENOCS). In this system no video transcoding is necessary.

Optionally the dongle (ENOCS) of any of the embodiments described above could include wireless technology such as Bluetooth or NFC to support close proximity devices. The dongle (ENOCS) then gives the system an on-the-fly decryption capability with all the advantages of having a hardware-based root of trust within the system. As described, some embodiments include transcoding locally so that other client devices (companion devices for example) can receive the decrypted streaming content. Other embodiments remove the necessity for any transcoding. For example, instead of having a local server receiving encoded streaming content from an HTTP live streaming server (HLSS) and the local server performing a transcoding in order for say an *iPad* (TBLT-NMP) to be able to read it, according to an embodiment of the invention, the *iPad* (TBLT-NMP) could receive the *Nagra MediaAcess PRM* encoded content directly and then send it to be decoded on-the-fly to the dongle (ENOCS) wirelessly. The dongle (ENOCS) sends back the decoded content to the *iPad* (TBLT-NMP). The dongle (ENOCS) and the *iPad* (TBLT-NMP) must be local to each other so that only that particular dongle (ENOCS) will get the coded content and the *iPad* (TBLT-NMP) will get content decoded in a way that it is traceable to that dongle (ENOCS).

An *iPad* running a *Safari* browser with *QuickTime* or a *Chrome* browser could be used to receive the unencrypted streaming content packets in the original video format in which it was encoded.

According to embodiments of the present invention, the dongle (ENOCS) containing hardware configured to function according to the particular type of encryption *(NOCS* for example) plugs in between the existing HDMI (MHL) and one of the following upstream devices:
1) Existing HD television connected to an existing media server device. Examples include the *Raspberry Pi* running *XBMC* and various other MHL *Android* devices. Potentially with commercials in place an existing *Roku, AppleTV, GoogleTV* hardware could be used with updated software;
2) Existing middleware set-top-box with HDMI support which does not already have *NOCS* support. (and which the manufacturer of the set-top box can offer to update the software);
3) Existing non-secure 3rd party HDMI devices to which a provider would like to add PayTV support, where the provider is willing to modify his software. A potential option for a companion device dongle is also possible:
4) Existing tablets or smartphones e.g. the *Samsung Galaxy* range today supports HDMI/MHL. HDMI/USB is also a hardware connectivity option for *iOS* devices via the dock/lightning connectors.

However note that in the home, in-the-clear transcoding from one of the above devices would be preferable to such device end users rather than an external dongle attached to the companion device.

In all of the embodiments described above, the dongle, or security device (ENOCS), being connected via one of the known interfaces described, is consequently detachable from the media server device (MS) in a manner which is known in the domain of removable conditional access modules. This way, a standard system for playing streaming media content, the system comprising an existing media server device (MS) from a third-party supplier, can be easily upgraded to provide secure hardware-based root of trust functionality by using the security device or dongle (ENOCS) described herein.

Embodiments of the present invention therefore allow for a hardware-based root of trust to be realised using wireless technology as a local proximity key. By connecting a removable dongle to a streaming receiver the hardware-based root of trust may be realised. The dongle can thereby be used in the form of a CAS to perform on-the-fly decoding of encrypted HTTP live streaming segments.

## Claims

1. A system for receiving and decrypting streaming content (SCT), the streaming content (SCT) being encrypted according to a particular encryption scheme (PRM), said decryption yielding at least one decrypted value which is based on at least one traceable hardware-based key embedded within the system, the system comprising:
a media server device (MS) for receiving the encrypted streaming content (SCT), the media server device (MS) being configured to process the decrypted content; and
a first media display device (TV) for displaying the processed decrypted content;
**characterised in that** the system further comprises a detachable security device (ENOCS) for:
receiving at least part of the encrypted streaming content (SCT) from the media server device (MS); and
decrypting at least part of the encrypted streaming content (SCT) from the media server device (MS) using the traceable hardware-based key, said traceable hardware-based key being embedded within the security device (ENOCS);
the security device (ENOCS) being further configured to return the decrypted at least part of the encrypted streaming content (SCT) to the media server device (MS).

2. The system according to claim 1, wherein the first media display device (TV) is configured to receive the decrypted content according to a first format, the system further comprising at least a second media display device (V-CLIENT) configured to receive the decrypted content according to a second format, the system still further comprising at least one transcoder at least for converting the decrypted content to the second format for the second media display device (V-CLIENT).

3. The system according to any of the preceding claims, the media server device (MS) configured to receive the encrypted streaming content (SCT) from a streaming content server (HLSS).

4. The system according to either of claims 1 or 2, the system further comprising a tuner (TUNE) configured to receive and demodulate the encrypted streaming content (SCT) from a terrestrial modulated digital video broadcast, the media server device (MS) configured to receive the encrypted streaming content (SCT) from the tuner (TUNE).

5. The system according to any of the preceding claims, wherein the security device (ENOCS) is configured to decrypt at least one encrypted control word from the at least part of the encrypted streaming content (SCT) received from the media server device (MS) using said traceable hardware-based key and to return at least one decrypted control word to the media server device for decrypting at least part of the encrypted streaming content (SCT).

6. The system according to any of claims 1 to 4, wherein the security device (ENOCS) is configured to decrypt at least one segment of the encrypted streaming content (SCT) received from the media server device (MS) using said traceable hardware-based key and to return at least one decrypted segment of the decrypted content to the media server device.

7. The system according to any of the preceding claims, wherein the security device (ENOCS) is connected to the media server device (MS) via a hardwired interface at least for said receiving of at least part of the encrypted streaming content (SCT) and said returning of the decrypted at least part of the encrypted streaming content (SCT).

8. The system according to any of claims 1 to 6, at least the media server device (MS) and the security device (ENOCS) being configured to communicate with each other via a wireless interface, said communication at least for said receiving of at least part of the encrypted streaming content (SCT) and said returning of the decrypted at least part of the encrypted streaming content (SCT).

9. The system according to claim 8, wherein the wireless interface is configured to operate according to a Bluetooth protocol or an NFC wireless RF protocol.

10. The system according to any of the preceding claims, wherein the system further comprises a tablet computer (TBLT-NMP), the tablet computer (TBLT-NMP) comprising the media server device and the first media display device (TV).

11. The system according to any of the preceding claims, wherein the particular encryption system (PRM) is part of a Nagra MediaAccess Persistent Rights Management system.

12. The system according to either of claims 9 or 11, wherein the security device is comprised within a mobile telephone, the wireless interface being configured to operate according to an NFC wireless RF protocol.

13. A mobile telephone comprising an NFC wireless RF interface, the mobile telephone **characterised in that** it further comprises a security device (ENOCS), the security device (ENOCS) configured to:
receive, via the NFC wireless RF interface, at least part of an encrypted streaming content (SCT) from a media server device (MS); and
decrypt at least part of the encrypted streaming content (SCT) from the media server device (MS) using a traceable hardware-based key embedded within the security device (ENOCS);
the security device (ENOCS) being further configured to return the decrypted at least part of the encrypted streaming content (SCT) to the media server device (MS) via the NFC wireless RF interface.
